# EUROPÄISCHE PATENTSCHRIFT

(11) **EP 2 822 801 B1**
(45) Veröffentlichungstag und Bekanntmachung des Hinweises auf die Patenterteilung: **28.10.2015**
(21) Anmeldenummer: 13811486.3
(22) Anmeldetag: 18.12.2013
(51) Int. Cl.: B60L 5/08, B60L 5/38

(54) **ZUSTELLEINHEIT ZUR POSITIONIERUNG EINER STROMABNEHMEREINHEIT**
ADVANCING UNIT FOR POSITIONING A CURRENT COLLECTOR UNIT
SYSTÈME D'AVANCE SERVANT À POSITIONNER UN ENSEMBLE BALAI CONDUCTEUR

(30) Priorität: 02.01.2013 DE 102013100019
(43) Veröffentlichungstag der Anmeldung: 14.01.2015
(73) Patentinhaber: Conductix-Wampfler GmbH, 79576 Weil am Rhein (DE)
(72) Erfinder: MÜLLER, Jörg, 79618 Rheinfelden (DE)
(74) Vertreter: Charrier, Rapp & Liebau
(86) Internationale Anmeldenummer: PCT/EP2013/077138
(87) Internationale Veröffentlichungsnummer: WO 2014/106579

(56) Entgegenhaltungen:
- EP-A2- 1 225 081
- EP-A2- 1 394 428
- DE-A1- 4 430 492
- DE-A1-102011 001 712
- DE-C- 940 798
- JP-A- S63 234 803
- JP-U- S5 327 567
- US-A- 2 190 213
- US-B1- 6 571 932

## Beschreibung

Die Erfindung betrifft eine Zustelleinheit zur Positionierung einer Stromabnehmereinheit nach dem Oberbegriff des Anspruchs 1.

Eine derartige Zustelleinheit ist aus der DE 10 2011 001 712 A1 bekannt. Sie ist Bestandteil eines Stromabnehmersystems, das an einem Standbein eines Krans befestigt und mit diesem entlang einer Trasse verfahrbar ist, an der mindestens eine Stromschiene angeordnet ist. Eine Stromabnehmereinheit des Stromabnehmersystems kann mit der Stromschiene elektrischen Kontakt herstellen, wobei die Stromabnehmereinheit hierzu über die in horizontaler Richtung verfahrbare Zustelleinheit an eine Einführungseinrichtung der Trasse heranfahrbar ist. Die Stromabnehmereinheit ist in vertikaler Richtung verschieblich in einer Führung an der horizontalen Zustelleinheit gelagert, wodurch Stromabnehmerkontakte der Stromabnehmereinheit mittels der Einführungseinrichtung in vertikaler Richtung an die Stromschiene herangeführt werden können, um mit dieser einen elektrischen Kontakt herzustellen.

Die US 2 190 213 A1 offenbart eine flexible Abdeckung für eine Führungsschiene an einer Werkzeugmaschine, wobei die Abdeckung die Form eines Bandes hat, welches von einem beweglichen Schlitten von einer am Ende der Führungsschiene angebrachten Federtrommel abgerollt wird, wenn sich der Schlitten von der Federtrommel wegbewegt, und in die Federtrommel eingezogen wird, wenn sich der Schlitten auf die Federtrommel zubewegt.

Die DE 940 798 offenbart eine Schutzeinrichtung für Werkzeugmaschinen zum Abdecken von Durchbrüchen, welche nötig sind, um ein verschiebbares Teil der Werkzeugmaschine mit seinem Antriebsmittel zu verbinden. Als Abdeckband wird ein federndes, ohne Einwirkung äußerer Kräfte eine gestreckte oder annähernd gestreckte Lage einnehmendes Band verwendet, wobei die zum Aufwickeln des Bandes bestimmte Achse feststeht und das Band um diese Achse mit einer Anzahl Windungen spiralig unter Vorspannung herumgelegt ist.

Stromabnehmersysteme der eingangs genannten Art werden üblicherweise im Freien eingesetzt und sind daher ungünstigen Umgebungs- und Witterungseinflüssen ausgesetzt. Zu diesen gehören insbesondere Nässe und Verschmutzung durch Ablagerung von Staub oder Sand sowie im Winter die Ablagerung von Schnee und die Bildung von Eis durch gefrierende Nässe. Dies kann im Bereich der Laufflächen von Führungen zu erhöhter Reibung, Korrosion und schlimmstenfalls zu einer Blockierung der Beweglichkeit einer Zustelleinheit führen. Besonders gefährdet ist hierbei eine horizontale Zustelleinheit, weil deren Laufflächen annähernd horizontal liegen und damit besonders anfällig für Ablagerungen der zuvor genannten Art sind.

Aufgabe der Erfindung ist es deshalb, eine gattungsgemäße Zustelleinheit gegen eine Beeinträchtigung ihrer Funktionsfähigkeit durch ungünstige Umgebungs- und Witterungseinflüsse zu schützen.

Diese Aufgabe wird erfindungsgemäß durch eine Zustelleinheit mit den Merkmalen des Anspruchs 1 gelöst. Vorteilhafte Weiterbildungen und bevorzugte Ausgestaltungen der Erfindung sind in den Unteransprüchen angegeben.

Erfindungsgemäß ist bei einer gattungsgemäßen Zustelleinheit an dem Ausschub ein flexibles Band angeordnet, von dem ein Abschnitt die offene Längsseite des Hohlraumes entlang eines aus der Befestigungsvorrichtung herausragenden Abschnitts des Ausschubs zumindest teilweise abdeckt und ein anderer Abschnitt sich in einem Reservoir befindet. Ein erstes Ende des Bandes ist entweder mit der Befestigungseinheit oder mit einem Ende des Ausschubs verbunden und das zweite Ende des Bandes ist unter einer Zugspannung in Längsrichtung an einer Zugvorrichtung gelagert, die bei einer Bewegung des Ausschubs, durch die sich der aus der Befestigungsvorrichtung herausragende Abschnitt des Ausschubs verkürzt oder verlängert, das Band um die gleiche Länge und mit der gleichen Geschwindigkeit in das Reservoir zieht bzw. aus dem Reservoir ausgibt.

Hierdurch werden die Kontaktflächen für Führungselemente in dem Hohlraum wirksam gegen das Eindringen von Schmutz, Sand, Nässe, Schnee sowie Fremdkörpern geschützt und eine einwandfreie Funktion der Führungen auch unter ungünstigen Umgebungs- und Witterungsbedingungen gewährleistet. Ein flexibles Band variabler Länge, von dem sich ein Teil in einem Reservoir befindet und je nach Bedarf dorthin eingezogen oder unter Beibehaltung einer Zugspannung ausgegeben wird, ist eine einfache und kostengünstige Lösung, welche keine konstruktiven Änderungen an der Mechanik der Zustelleinheit als solcher erfordert und sich durch Robustheit im Betrieb auszeichnet. Falls das Band mit einem Ende des Ausschubs verbunden ist, dann ist dies das vordere Ende des Ausschubs, welches in einer aus der Befestigungseinheit ausgefahrenen Endstellung des Ausschubs weiter als das andere Ende von der Befestigungseinheit entfernt ist.

In einer besonders vorteilhaften Ausführungsform weist die Zugvorrichtung eine an dem vorderen Ende des Ausschubs angeordnete Umlenkrolle, über die das Band gerührt ist, und einen in dem Ausschub linear beweglich geführten Schlitten auf, der durch ein Getriebe mit dem Ausschub kinematisch so gekoppelt ist, dass er sich bei einer Bewegung des Ausschubs gegenüber der Befestigungseinheit in der gleichen Richtung und mit der gleichen Geschwindigkeit gegenüber dem Ausschub bewegt, und das zweite Ende des Bandes ist in einem hinteren Abschnitt des Schlittens, welcher sich in einer aus dem Ausschub ausgefahrenen Endstellung des Schlittens noch innerhalb des Ausschubs befindet, mit dem Schlitten verbunden.

Hierdurch wird ein zur Verlängerung des Verfahrbereiches der Zustelleinheit ohnehin vorgesehener Schlitten, der sich teleskopartig innerhalb des Ausschubs bewegt, zum Bewegen des zweiten Endes des Bandes mitbenutzt. Das Reservoir für den zum Abdecken des Hohlraumes nicht benötigten Abschnitt des Bandes bildet in diesem Fall ein ohnehin vorhandener Zwischenraum zwischen dem Ausschub und dem Schlitten im Inneren des Ausschubs. Die zum Schutz der Kontaktflächen der Führungselemente nötigen Modifikationen an einer gattungsgemäßen Zustelleinheit sind daher nur geringfügig, d.h. sie beschränken sich auf die Verbindung der Enden des Bandes mit der Befestigungseinheit bzw. mit dem Schlitten und die Anbringung einer Umlenkrolle für das Band an dem vorderen, d.h. der zu verfahrenden Stromabnehmereinheit zugewandten Ende des Ausschubs.

Die Zugspannung in dem Band kann in einfacher Weise eingestellt und bei seiner Bewegung aufrechterhalten werden, indem die Umlenkrolle dergestalt beweglich gelagert ist, dass die Zugspannung des Bandes von der Stellung der Umlenkrolle abhängt, und dass sie zwischen zwei Endstellungen in einer beliebigen Stellung fixierbar ist, in welcher die Zugspannung einen geeigneten Wert hat. Alternativ kann die Umlenkrolle dergestalt federnd gelagert sein, dass die Zugspannung des Bandes durch die Federkraft der Lagerung bestimmt wird.

Eine ebenfalls vorteilhafte Ausführungsform besteht darin, dass die Zugvorrichtung und zugleich das Reservoir für den zum Abdecken des Hohlraumes nicht benötigten Abschnitt des Bandes durch eine Federtrommel gebildet wird, welche das Band abhängig von der Bewegungsrichtung des Ausschubs entweder aufwickelt oder abwickelt und durch eine Feder in der Richtung des Aufwickelns so vorgespannt ist, dass sie das Band in jeder Stellung des Ausschubs unter einer Zugspannung hält. Federtrommeln sind als solche in Stand der Technik bekannt und bewährt, d.h. es kann ein auf dem Markt erhältliches fertiges Bauteil eingesetzt werden. Ein Vorteil dieser Ausführungsform besteht darin, dass sie unabhängig vom Vorhandensein eines teleskopartig innerhalb des Ausschubs bewegbaren Schlittens funktioniert und somit auch bei einer Zustelleinheit, die nur einen Ausschub allein aufweist, angewendet werden kann.

Da es bei dieser Ausführungsform nur auf die Relativbewegung zwischen dem Ausschub und der Befestigungseinheit ankommt, kann entweder die Federtrommel an einem vorderen Ende des Ausschubs, welches in der ausgefahrenen Endstellung des Ausschubs weiter als dessen anderes Ende von der Befestigungseinheit entfernt ist, angeordnet sein, wenn das erste Ende des Bandes mit der Befestigungseinheit verbunden ist, oder die Federtrommel kann an der Befestigungseinheit angeordnet sein, wenn das erste Ende des Bandes mit dem vorderen Ende des Ausschubs, welches in der ausgefahrenen Endstellung des Ausschubs weiter als dessen anderes Ende von der Befestigungseinheit entfernt ist, verbunden ist.

Es kann auch sinnvoll sein, das Band so anzuordnen, dass es die offene Seite des Hohlraumes nur an einer von zwei in der Zustellrichtung parallel zueinander verlaufenden Längskanten des Hohlraumes ganz abdeckt und an der anderen Längskante ein schmaler Spalt vorbestimmter Breite zwischen der Längskante des Hohlraumes und dem Band offen bleibt. Hierdurch wird es ermöglicht, dass Kondenswasser und Wasser, das aufgrund der nicht völlig hermetischen Abdichtungswirkung des Bandes in den Hohlraum einsickert, aus dem Hohlraum abfließen kann. Diese Anordnung zielt auf den Fall ab, dass die Längsrichtung des Ausschubs und damit auch des gespannten Bandes die Horizontalrichtung ist. Die ganz abgedeckte des Hohlraumes ist in diesem Fall die obere Längskante und der schmale Spalt befindet sich an der unteren Längskante, wodurch für das Ableiten von Kondens- und Sickerwasser die Wirkung der Schwerkraft genutzt werden kann.

Zweckmäßig ist es, wenn der Ausschub an mindestens einer sich in der Zustellrichtung erstreckenden Außenseite, an welcher sich kein Hohlraum mit Kontaktflächen für Führungselemente befindet, eine geschlossene Abdeckung aufweist. Hierdurch kann der Innenraum des Ausschubs, in dem zur Verlängerung des Verfahrbereiches der Zustelleinheit ein teleskopartig gegenüber dem Ausschub bewegbarer Schlitten mit entsprechenden Führungselementen und Kontaktflächen vorgesehen sein kann, wirksam vor Verschmutzung und vor Witterungseinflüssen geschützt werden, ohne dass hierfür ein zweites Band wie an der Außenseite des Ausschubs als Abdeckung benötigt wird.

Das flexible Band sollte aus einem kälteflexiblen und feuchtigkeitsabweisenden Material bestehen, wofür sich vorzugsweise Kunststoff, insbesondere Polyurethan eignet. Aber auch Polyamid oder Polyvinylchlorid und kommen grundsätzlich in Frage. Das Band kann aus einem homogenen Materialstück, aber auch aus einem Gewebe bestehen. Durch die Ausstattung mit einer elektrischen Heizvorrichtung in Form entlang des Bandes verlaufender oder in das Band integrierter flexibler leitender Drähte kann das Band wirksam vor einer Vereisung und Beeinträchtigung seiner Flexibilität bei extremer Kälte geschützt werden. Der Anschluss solcher Heizdrähte an eine Stromversorgung kann an der Verbindungsstelle zu der Befestigungseinheit erfolgen.

Um den durch das Band abgedeckten Hohlraum noch besser gegen das Eindringen von Schmutz oder Niederschlag zu schützen, kann er von der Befestigungseinheit aus durch eine Druckluftversorgung mit einem Überdruck gegenüber der Umgebung beaufschlagt werden. Diese Maßnahme ist insbesondere dann wirksam, wenn die Abdeckung nicht hermetisch ist, indem die eingeblasene Druckluft dann durch zwischen dem Ausschub und dem Band bestehende Spalte in die Umgebung strömt und diese Strömung dem Eindringen von Partikeln durch solche Spalte entgegenwirkt. Dabei kann die eingeblasene Druckluft insbesondere temperiert sein, um das Band bei niedriger Umgebungstemperatur auf diese Weise zu beheizen.

Um das Band sauber und trocken zu halten und einem Anhaften an der Umlenkrolle bzw. innerhalb eines Bandwickels auf einer Federtrommel vorzubeugen, ist es zweckmäßig, an einer Stelle, die bei einer Bewegung des Ausschubs von der in die Befestigungseinheit eingefahrenen Endstellung in die aus der Befestigungseinheit ausgefahrene Endstellung von dem dadurch bewegten Abschnitt des Bandes passiert wird, einen Abstreifer anzuordnen, über dessen Oberfläche die Oberfläche des Bandes bei dessen Bewegung gleitet.

Schließlich kann bei Bedarf noch ein zweites flexibles Band gleicher Art vorgesehen werden, um einen von dem ersten Band nicht abgedeckten Abschnitt der offenen Längsseite des Hohlraumes entlang eines aus der Befestigungsvorrichtung in der entgegengesetzten Richtung herausragenden Abschnitts des Ausschubs abzudecken, wobei die Enden des zweiten Bandes in gleicher Weise mit der Befestigungseinheit auf deren entgegengesetzter Seite oder mit dem entgegengesetzten Ende des Ausschubs verbunden bzw. an einer Zugvorrichtung gleicher Art gelagert werden können wie diejenigen des ersten Bandes. Hierdurch können die Kontaktflächen in dem Hohlraum gegen Verschmutzung und Witterungseinflüsse insbesondere dann geschützt werden, wenn ein hinterer Teil des Ausschubs in dem in die Befestigungseinheit eingefahrenen Zustand nicht durch ein Gehäuse der Befestigungseinheit umhüllt ist, sondern in der anderen Richtung aus der Befestigungseinheit herausragt.

Weitere Besonderheiten und Vorzüge der Erfindung ergeben sich aus der folgenden Beschreibung eines bevorzugten Ausführungsbeispiels anhand der begleitenden Zeichnungen. Es zeigen:
- Fig.1: eine dreidimensionale Ansicht eines Stromabnehmersystems mit einer horizontalen Zustelleinheit nach dem Stand der Technik in ausgefahrener Endstellung,
- Fig. 2: einen Schnitt durch die horizontale Zustelleinheit des Stromabnehmersystems von Fig. 1 auf Höhe der Linie A-A,
- Fig. 3: eine Ansicht des Stromabnehmersystems von Fig. 1 von unten,
- Fig. 4: eine dreidimensionale Ansicht einer erfindungsgemäßen horizontalen Zustelleinheit in eingefahrener Endstellung und
- Fig. 5: eine dreidimensionale Ansicht einer erfindungsgemäßen horizontalen Zustelleinheit in ausgefahrener Endstellung.

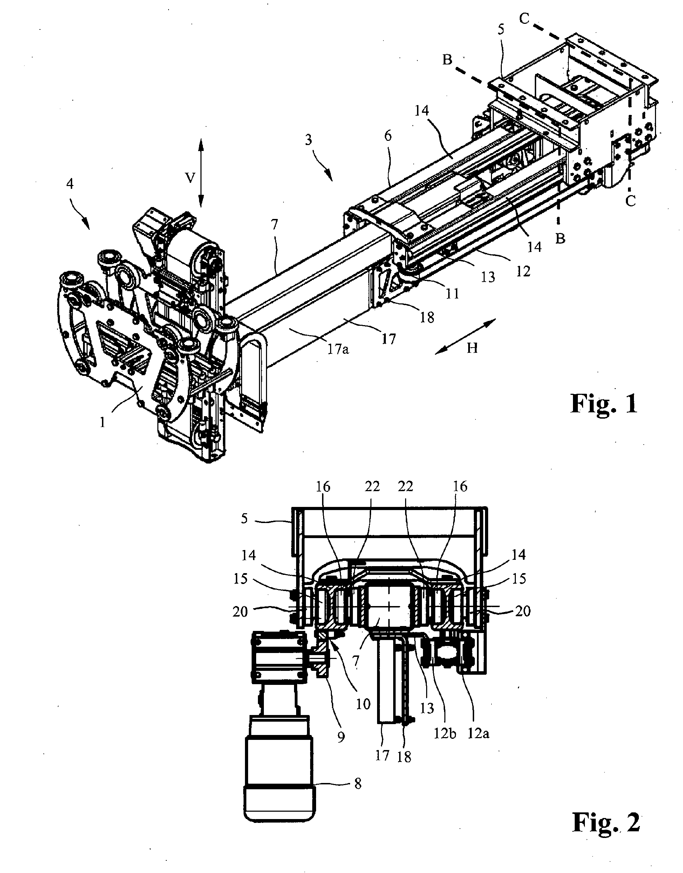

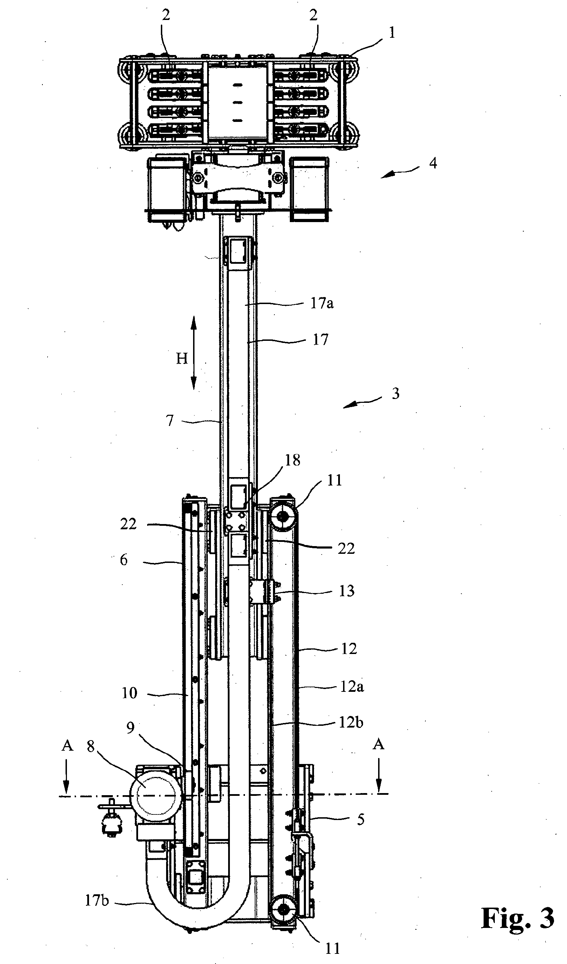

Fig. 1 zeigt in einer dreidimensionalen Ansicht ein Stromabnehmersystem zur Stromversorgung eines Krans, welches dazu bestimmt ist, an einem Fuß eines Krans ungefähr in der gleichen Höhe wie eine seitlich parallel zu einem Verfahrweg des Krans verlaufende Stromschienenanordnung angeordnet zu werden. Zur Verbindung mit der Stromschienenanordnung weist das Stromabnehmersystem eine Stromabnehmereinheit 1 mit mehreren Stromabnehmerkontakten 2 (Fig. 3) auf. Die Stromabnehmereinheit 1 ist durch eine horizontale Zustelleinheit 3 und eine vertikale Zustelleinheit 4 in einer horizontalen Zustellrichtung H und in einer vertikalen Zustellrichtung V bewegbar, wie es in den Figuren mit entsprechend gekennzeichneten Doppelpfeilen angedeutet ist.

Die horizontale Zustelleinheit 4 weist einen Befestigungsrahmen 5 auf, der zur Befestigung an einem Kranfuß vorgesehen ist. In dem Befestigungsrahmen 5 ist ein Ausschub 6 in der horizontalen Zustellrichtung H, welche quer zur Fahrtrichtung des Krans verläuft, bewegbar gelagert. Der Ausschub 6 kann zwischen einer eingefahrenen Endstellung und einer in Fig. 1 und 3 gezeigten ausgefahrenen Endstellung bewegt werden. In dem Ausschub 6 ist ein Schlitten 7 gegenüber dem Ausschub 6 wiederum in der horizontalen Zustellrichtung H bewegbar gelagert, wobei der Schlitten 7 vollständig in den Ausschub 6 eingefahren werden kann. Die Stromabnehmereinheit 1 ist am vorderen Ende des Schlittens 7 angeordnet, also in Fig. 1 am linken unteren Ende und in Fig. 3 am oberen Ende.

Da sowohl der Ausschub 6 als auch der Schlitten 7 in der horizontalen Zustellrichtung H beweglich angeordnet sind, kann die Stromabnehmereinheit 1 zwischen einer eingefahrenen Endstellung, in der sie unmittelbar an dem Befestigungsrahmen 5 anliegt, und einer ausgefahrenen Endstellung, in der sie die maximal mögliche Distanz von dem Befestigungsrahmen 5 hat, verfahren werden. In den Figuren 1 und 3 ist jeweils die ausgefahrene Endstellung gezeigt.

Das Verfahren des Ausschubs 6 und des Schlittens 7 wird wie nachfolgend beschrieben bewerkstelligt. Zum Verfahren des Ausschubs 6 ist, wie in den Figuren 2 und 3 erkennbar, am Befestigungsrahmen 5 ein als Elektromotor ausgebildeter Ausschubmotor 8 befestigt. Der Ausschubmotor 8 treibt über ein Antriebsritzel 9 eine fest an dem Ausschub 6 befestigte Zahnstange 10 an, welche fast über die gesamte Länge des Ausschubs 6 reicht. Hierdurch kann der Ausschub 6 zwischen seinen beiden Endstellungen verfahren werden. In Fig. 1 ist der Ausschubmotor 8 durch den Ausschub 6 verdeckt und daher nicht sichtbar.

Um den Schlitten 7 einfach ein- und ausfahren zu können, ohne einen eigenen Elektromotor vorsehen zu müssen, sind am vorderen und hinteren Ende des Ausschubs 6 Umlenkrollen 11 (Fig. 3) angeordnet, die um vertikal verlaufende Achsen drehbar sind. Um die Umlenkrollen 11 ist ein Riemen 12 aus elastischem und/oder flexiblem Material gelegt und, wie in den Figuren 2 und 3 erkennbar, mit einem Befestigungstrumm 12a am Befestigungsrahmen 5 befestigt. An einem Zugtrumm 12b des Riemens 12 ist der Schlitten 7 mittels einer Winkelplatte 13 befestigt.

Wird nun der Ausschub 6 durch den Ausschubmotor 8 von der eingefahrenen Endstellung in der horizontalen Zustellrichtung H ausgefahren, d.h. in der Ansicht von Fig. 3 nach oben bewegt, so wird der Riemen 12 so mitbewegt, dass er in der Ansicht von Fig. 3 im Uhrzeigersinn um die Umlenkrollen 11 läuft. Da der Schlitten 7 fest mit dem Riemen 12 verbunden ist, zieht der Riemen 12 den Schlitten 7 mit, so dass der Schlitten 7 in die gleiche horizontale Zustellrichtung H bewegt wird wie der Ausschub 6. Somit können der Ausschub 6 und der Schlitten 7 gleichmäßig mit einfachen Mitteln zwischen den beiden Endstellungen verfahren werden, und zwar so, dass sich der Schlitten 7 gegenüber dem Ausschub 6 stets mit derselben Geschwindigkeit bewegt wie der Ausschub 6 gegenüber dem Befestigungsrahmen 5.

Der in Fig. 2 gezeigte Schnitt quer durch die horizontale Zustelleinheit 3 entlang der Linie A-A in Fig. 3 verdeutlicht den Aufbau der horizontalen Zustelleinheit 3. Gut erkennbar ist darin der Antrieb des Ausschubs 6 über den Ausschubmotor 8, das Antriebsritzel 9 und die an dem Ausschub 6 befestigte Zahnstange 10. Der Ausschub 6 weist als seitliche Trägerteile zwei parallel zueinander angeordnete doppel-T-förmige Schienen 14 auf, die in drehbar am Befestigungsrahmen 5 gelagerten Ausschubrollen 15 beweglich gelagert sind. Ebenso greifen drehbar am Schlitten 7 gelagerte Schlittenrollen 16 in die andere Seite der Doppel-T-förmige Schienen 14 ein, so dass der Schlitten 7 verfahrbar am Ausschub 6 gelagert ist. Der Riemen 12 ist über die Winkelplatte 13 an einem im Querschnitt rechteckförmigen Hohlträger des Schlittens 7 befestigt.

Da der Riemen 12 vorteilhaft aus einem elastischen Material besteht, wird eine in gewissen Grenzen elastische Verbindung mit einer stoßdämpfenden Wirkung zwischen der Stromabnehmereinheit 1 und dem Befestigungsrahmen 5 in der horizontalen Zustellrichtung H bereitgestellt. Beispielsweise kann der Riemen 12 als Keilriemen oder als Zahnriemen ausgebildet sein, wobei die Umlenkrollen 11 dann entsprechend an die Riemenform angepasst sind.

Um die mittels der Stromabnehmerkontakte 11 an einer Stromschienenanordnung abgegriffene elektrische Energie den Verbrauchern des Krans zuzuführen, ist an dem in Fig. 2 unteren Ende des Schlittens 7 eine an sich bekannte, in der Horizontalrichtung flexible Energiekette 17 befestigt, welche die elektrischen Zuleitungen im Bereich der Horizontalzustelleinheit 3 enthält. Die Energiekette 17 verläuft, wie insbesondere aus Fig. 3 hervorgeht, vom Befestigungsrahmen 5 unterhalb des Ausschubs 6 und des Schlittens 7 zum vorderen Ende des Schlittens 7. In der vorliegenden Ausführung ist die Energiekette 7 zweigeteilt und verläuft unterhalb von Ausschub 6 und Schlitten 7. Am hinteren Ende des Schlittens 1 ist eine Halterung 18 für den vom vorderen Ende des Schlittens 7 kommenden Teil 17a der Energiekette 17 und den vom Befestigungselement 5 kommenden Teil 17b der Energiekette 17 vorgesehen. Ein Kabelschlepp ist somit nicht notwendig, was vorteilhaft ist, da die beim Kabelschlepp bestehende Gefahr des Abreißens der herunterhängenden Kabel vermieden wird.

Bevorzugt kann der Ausschubmotor 8 der Horizontalzustelleinheit 3 geregelt betrieben werden, so dass das Anfahren langsam erfolgt, dann schnell weitergefahren wird und vor Ende der Zustellbewegung abgebremst wird. Hierdurch kann die Stromabnehmereinheit 1 sanft an eine Stromschienenanordnung heranangefahren werden. In einer weiteren vorteilhaften Ausführung kann der Ausschubmotor 8 auch mit einem Lagegeber versehen werden, so dass aus der Motorbewegung die genaue Position der Stromabnehmereinheit 1 bezüglich des Kranfußes bestimmt werden kann.

Die horizontale Zustelleinheit 3 weist aufgrund des elastischen und/oder flexiblen Riemens 12 einen geringen Verschleiß und eine schnelle Zustellung auf. Zudem hat die horizontale Zustelleinheit 3 eine kompakte Bauform, da anders als bei einer Teleskopvorrichtung üblicher Art nicht mehrere rechteckförmige Profile ineinander geführt werden müssen.

Die Zustellung der Stromabnehmereinheit 1 in vertikaler Zustellrichtung V erfolgt über eine vertikale Zustelleinheit 4, die vergleichbar aufgebaut ist wie die horizontale Zustelleinheit 3, jedoch einen kürzeren Verfahrbereich hat und daher nicht zwei bewegliche Elemente im Sinne des Ausschubs 6 und des Schlittens 7, sondern nur ein bewegliches Element aufweist. Zum Verständnis der vorliegenden Erfindung bedarf die vertikale Zustelleinheit 4 keiner Erläuterung.

Während der Befestigungsrahmen 5 und der dahinter liegende Raum, welchen der Ausschub 6 in seiner eingefahrenen Endstellung einnimmt, mit einem Gehäuse umbaut werden kann, um den Ausschub 6 gegen Verschmutzung und Witterungseinflüsse zu schützen, ragt der Ausschub 6 notwendigerweise in den freien Raum, sobald er sich in einer zumindest teilweise ausgefahrenen Stellung befindet, und ist dort Nässe, Verschmutzung und im Winter der Ablagerung von Schnee sowie einer Vereisung ausgesetzt. Die Laufflächen der Schlittenrollen 16 des Schlittens 7 an den Innenseiten der Doppel-T-Schienen 14 können hiergegen durch die Anbringung einer festen Abdeckung auf der Oberseite des Ausschubs 6 geschützt werden, nicht jedoch die Laufflächen der an dem Befestigungsrahmen 5 angeordneten Ausschubrollen 15 an den Außenseiten der Doppel-T-Schienen 14.

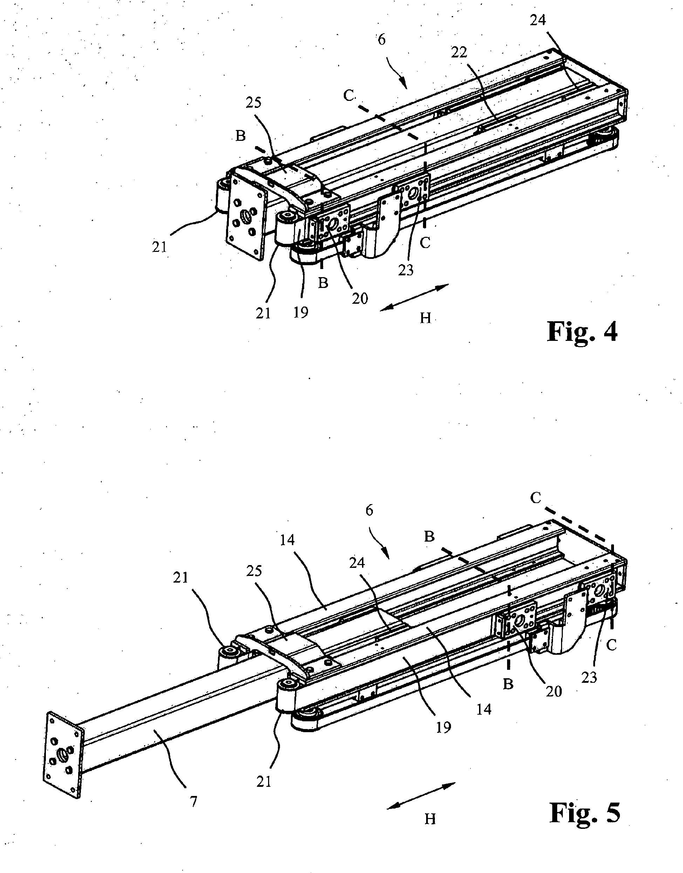

Wie erfindungsgemäß auch die Laufflächen der an dem Befestigungsrahmen 5 angeordneten Ausschubrollen 15 an den Außenseiten der Doppel-T-Schienen 14 geschützt werden können, zeigen die Figuren 4 und 5, in denen nur der Ausschub 6 und der Schlitten 7 sowie einige der mit dem Ausschub 6 und dem Schlitten 7 verbundenen Komponenten dargestellt sind. Die gesamte vertikale Zustelleinheit 4 mit der Stromabnehmereinheit 1, der Befestigungsrahmen 5, der Ausschubmotor 8 und die Energiekette 17 sind in diesen Figuren zur Vereinfachung weggelassen. Fig. 4 zeigt die eingefahrene Endstellung des Ausschubs 6 und des Schlittens 7, während Fig. 5 deren ausgefahrene Endstellung zeigt. Zur Erleichterung eines Vergleichs mit Fig. 1 ist in den Figuren 4 und 5 jeweils die Position des dort nicht dargestellten Befestigungsrahmens 5 durch zwei gestrichelte Winkel B-B und C-C markiert, die auch in Fig. 1 eingetragen sind.

Zum Schutz gegen Verunreinigung und Witterungseinflüsse ist die offene Seite des Hohlraumes an der Außenseite einer Doppel-T-Schiene 14, in dem die Ausschubrollen 15 laufen, auf beiden Seiten des Ausschubs 6 auf einem Teil ihrer Länge durch ein sich in der Längsrichtung der Doppel-T-Schiene 14, welche der horizontalen Zustellrichtung H entspricht, erstreckendes Band 19 abgedeckt. Ein Ende dieses Bandes 19 ist an einem vorderen Ausschubrollenträger 20 befestigt, an dem eine vordere Ausschubrolle 15 gelagert ist. Dieser vordere Ausschubrollenträger 20 ist seinerseits fest mit dem Befestigungsrahmen 5 verbunden, was in den Figuren 4 und 5 nicht dargestellt ist, wodurch auch das Band 19 mit dem Befestigungsrahmen verbunden ist. Der durch das Band 19 abgedeckte Abschnitt des Hohlraumes an der Außenseite der Doppel-T-Schiene 14 erstreckt sich ausgehend von dem vorderen Ausschubrollenträger 20 bis zum vorderen Ende der Doppel-T-Schiene 14, d.h. es handelt sich um genau denjenigen Abschnitt, welcher in einer zumindest teilweise ausgefahrenen Stellung des Ausschubs 6 nach vorne, d.h. in Fig. 5 nach links unten, aus dem Befestigungsrahmen 5 herausragt.

Um dafür zu sorgen, dass das Band 19 bei einer Bewegung des Ausschubs 6 synchron zu dieser Bewegung in der Zustellrichtung H bewegt wird, also der den Hohlraum abdeckende Abschnitt des Bandes 19 bei einem Ausfahren des Ausschubs 6 verlängert und bei einem Einfahren des Ausschubs 6 verkürzt wird, ist das Band 19 über eine am vorderen Ende der Doppel-T-Schiene 14 um eine vertikale Achse drehbar gelagerte Umlenkrolle 21 geführt, welche es um 180° zur gegenüberliegenden Seite der Doppel-T-Schiene 14 hin umlenkt. Dort ist das Band 19 an einem vorderen Schlittenrollenträger 22 befestigt, an dem eine vordere Schlittenrolle 16 gelagert ist. Der vordere Schlittenrollenträger 22 ist seinerseits fest mit dem Schlitten 7 verbunden, wodurch auch das band 19 mit dem Schlitten 7 verbunden ist. Der umgelenkte Teil des Bandes 19 wird in der Ansichtsrichtung der Figuren 4 und 5 durch die Doppel-T-Schiene 14 verdeckt und ist daher dort nicht sichtbar.

Da sich, wie zuvor erläutert, der Schlitten 7 gegenüber dem Ausschub 6 stets in derselben Richtung wie der Ausschub 6 bewegt und dabei gegenüber dem Ausschub 6 dieselbe Geschwindigkeit hat wie der Ausschub 6 gegenüber dem Befestigungsrahmen 5, wird das Band beim Ausfahren des Ausschubs 6 aus dem Befestigungsrahmen 5 von der Innenseite der Doppel-T-Schiene 14 über die Umlenkrolle 21 auf die Außenseite der Doppel-T-Schiene 14 gezogen und beim Einfahren des Ausschubs 6 in den Befestigungsrahmen 5 umgekehrt von der Außenseite der Doppel-T-Schiene 14 über die Umlenkrolle 21 auf die Innenseite der Doppel-T-Schiene 14 gezogen, wobei es stets den Hohlraum an der Außenseite der Doppel-T-Schiene 14 in demjenigen Bereich abdeckt, welcher gerade nach vorne aus dem Befestigungsrahmen 5 herausragt. Die Gesamtlänge des Bandes 19 bleibt dabei konstant.

Die beiden Endpositionen des Bandes 19 sind in den Figuren 4 und 5 gezeigt. In der eingefahrenen Endstellung des Ausschubs 6 (Fig. 4) befindet sich fast die gesamte Länge des Bandes 19 im Inneren des Ausschubs 6, d.h. auf der Innenseite der Doppel-T-Schiene 14, während sich in der ausgefahrenen Endstellung des Ausschubs 6 (Fig. 5) fast die gesamte Länge des Bandes 19 an der Außenseite des Ausschubs 6, d.h. der Außenseite der Doppel-T-Schiene 14 befindet und die offene Seite des Hohlraumes, in dem die Ausschubrollen 15 laufen, abdeckt.

Das Band besteht aus einem flexiblen und elastischen Material wie Polyurethan und ist mit einer Vorspannung beaufschlagt, die auf einfache Weise durch die Lagerung der Umlenkrolle 21 erzeugt werden kann. So kann die Umlenkrolle 21 exzentrisch gelagert sein, so dass sich die Vorspannung durch eine Drehung dieser Lagerung und Fixierung in passender Stellung einstellen lässt. Die Umlenkrolle 21 könnte auch in Längsrichtung der Doppel-T-Schiene 14 linear verschiebbar federnd gelagert sein, um die Vorspannung des Bandes 19 zu erzeugen und eine alterungsbedingte Elastizitätsänderung oder eine temperaturbedingte Längenänderung des Bandes 19 auszugleichen. Auch eine exzentrische Lagerung der Umlenkrolle 21 könnte federnd ausgelegt sein, um dieselbe Wirkung zu erzielen. Ferner könnte auch ein Federelement in die Befestigung eines der beiden Enden des Bandes 19 an dem Ausschubrollenträger 20 oder an dem Schlittenrollenträger 22 integriert sein.

Anstelle einer Umlenkrolle 21 könnte als Umlenkelement auch ein unbeweglicher Körper mit einer abgerundeten und ausreichend glatten Oberfläche, über welche das Band 19 mit sehr geringer Reibung gleitet, verwendet werden, wenngleich eine Umlenkrolle 21 zur Minimierung der Reibung bei der Umlenkung eine besonders bevorzugte Lösung ist.

Wie in den Figuren 4 und 5 mit einer zweiten Umlenkrolle 21 angedeutet ist, ist die erfindungsgemäße Abdeckung der Außenseite des ausgefahrenen Teils des Ausschubs 6 durch ein Band 19 auf beiden Seiten des Ausschubs 6, die jeweils durch eine Doppel-T-Schiene 14 gebildet werden, gleichermaßen vorgesehen. Dass das Band 19 beim Ausfahren des Ausschubs 6 von dessen Innenseite abgezogen wird, ist unproblematisch, da der Ausschub 6 an seiner Oberseite und bei Bedarf auch an seiner Unterseite mit einer in den Figuren nicht gezeigten festen Abdeckung versehen werden kann, welche den Innenraum des Ausschubs und damit den anderen Hohlraum auf der Innenseite einer Doppel-T-Schiene 14 vor Verschmutzung und Witterungseinflüssen schützt.

Um die Außenseiten des Aussschubs 6 auch in der eingefahrenen Endstellung nach Fig. 4, in welcher der Ausschub 6 nach hinten über den Bereich des Befestigungsrahmens 5 hinausragt, zu schützen, kann der Raum, welcher von dem Ausschub 6 in dieser Stellung eingenommen wird, mit einem geschlossenen Gehäuse umbaut werden. Alternativ hierzu könnte aber auch ein weiteres Band derselben Art über eine weitere Umlenkrolle um das andere Ende einer Doppel-T-Schiene 14 herumgeführt werden. Dieses zweite Band wäre dann an dem hinteren Ausschubrollenträger 23 und an dem hinteren Schlittenrollenträger 24 zu befestigen. Die Funktionsweise eines solchen zweiten Bandes wäre vollkommen analog zu derjenigen des ersten Bandes 19 und bedarf insofern keiner näheren Erläuterung mehr.

In einer zweiten Ausführungsform der Erfindung ist das Band 19 in der eingefahrenen Endstellung des Ausschubs 6 (Fig. 4) auf einer am vorderen Ende des Ausschubs 6 anstelle der Umlenkrolle 21 angeordneten Federtrommel, die durch eine interne Feder in der Aufwickelrichtung vorgespannt ist, aufgewickelt. Beim Ausfahren des Ausschubs 6 wird das Band 19 bei dieser Ausführungsform von der Federtrommel abgewickelt, um ebenso wie bei der ersten Ausführungsform die Außenseite des Ausschubs 6 abzudecken. Diese Alternative Ausführungsform ist in den Zeichnungen nicht dargestellt, da sie sich von der ersten Ausführungsform nur durch den Ersatz der Umlenkrolle 21 durch eine Federtrommel an sich bekannter Art und die Befestigung des zweiten Endes des Bandes 19 an dieser Federtrommel anstelle des vorderen Schlittenrollenträgers 22 unterscheidet.

Der Anbringungsort der Federtrommel an dem Ausschub 6 entspricht im Wesentlichen demjenigen der Umlenkrolle 21. Wenn eine Federtrommel im Vergleich zu der Umlenkrolle 21 im aufgewickelten Zustand des Bandes 19 einen größeren Durchmesser hat, kann sie mittels eines Befestigungswinkels gegenüber der Position der Umlenkrolle 21 seitlich nach außen versetzt werden, um genügend Platz einen solchen größeren Durchmesser zu schaffen.

Die Vorspannung des Bandes 19 wird in diesem Fall bereits durch die interne Feder der Federtrommel erzeugt, so dass hier auf andere Maßnahmen zum Vorspannen des Bandes 19 verzichtet werden kann. Die Federtrommel kann anstatt am vorderen Ende des Ausschubs 6 auch an dem Aussschubrollenträger 20 und das andere Ende des Bandes 19 dafür am vorderen Ende des Ausschubs 6 befestigt sein. Der Vorteil der zweiten Ausführungsform besteht darin, dass sie auch bei einem Ausschub 6 allein ohne einen Schlitten 7 mit der zuvor beschriebenen kinematischen Kopplung an den Ausschub 6 anwendbar ist, während die erste Ausführungsform das Vorhandensein eines solchen Schlittens 7 mit besagter kinematischer Kopplung für die Bewegung des zweiten Endes des Bandes 19 voraussetzt, weshalb diese Konfiguration vorausgehend ausführlich beschrieben wurde.

Auch die zusätzliche seitliche Abdeckung des hinteren Teils des Ausschubs 6, der in der eingefahrenen Endstellung von Fig. 4 nach hinten über den Befestigungsrahmen 5 hinausragt, kann ohne weiteres mit der zweiten Ausführungsform bewerkstelligt werden, indem an jeder Doppel-T-Schiene 14 jeweils ein zweites Band und eine zweite Federtrommel am hinteren Ende vorgesehen werden.

Bei dem dargestellten Ausführungsbeispiel kann eine Reihe weiterer erfindungsgemäßer Merkmale, die in den Figuren nicht sichtbar oder nicht dargestellt sind, Anwendung finden. Dazu gehört eine in der Vertikalrichtung geringfügig unsymmetrische, d.h. gegenüber der Mitte der Doppel-T-Schiene 14 nach oben versetzte Anordnung des Bandes 19, durch die an der Unterseite ein schmaler Spalt zwischen der Doppel-T-Schiene 14 und dem Band 19 verbleibt, durch den Kondenswasser oder eingesickertes Wasser nach unten ablaufen kann. Des Weiteren kann der Ausschub 6 an seiner Oberseite mit einer nicht dargestellten Abdeckung versehen sein, die ähnlich wie die Brücke 25 auf den Oberseiten der beiden seitlichen Doppel-T-schienen 14 aufliegt und dort fixiert ist, um den Innenraum des Ausschubs 6 und damit die Laufflächen der Schlittenrollen 16 an den Innenseiten der Doppel-T-Schienen 14 gegen das Eindringen von Niederschlag zu schützen. Eine solche Abdeckung erstreckt sich über die gesamte Länge des Ausschubs 6 und hat eine mir der Brücke 25 vergleichbare Querschnittsform.

Ferner kann zur Vermeidung des Eindringens von Partikeln aller Art der durch das Band (19) abgedeckte Hohlraum mit einem Überdruck gegenüber der Umgebung beaufschlagt werden. Dieser Überdruck kann von einer Druckluftquelle an Bord des Fahrzeugs, an dem der Befestigungsrahmen 5 montiert ist, bereitgestellt und über ein an dem Befestigungsrahmen 5 verlegte Druckluftleitung und einen Kanal in dem vorderen Ausschubrollenträger 20 in den Hohlraum hinter dem Band 19 eingeleitet werden. Da das Band den Hohlraum nicht hermetisch abdichtet, ergibt sich in diesem Fall eine Luftströmung aus dem Hohlraum durch existierende Spalte in die Umgebung, die den Eintrag von Partikeln aus der Umgebung verhindert. Um ein Entweichen der eingespeisten Druckluft in der falschen Richtung, d.h. in den Figuren 4 und 5 von dem vorderen Ausschubrollenträger 20 nach rechts oben zu vermeiden, kann an dem vorderen Ausschubrollenträger 20 eine an dem vertikalen Mittelteil der Doppel-T-Schiene 14 anliegende Dichtung vorgesehen sein, welche den Hohlraum in dieser Richtung abschließt, wobei diese Dichtung nicht hermetisch zu sein braucht.

Die eingespeiste Druckluft kann bei niedriger Umgebungstemperatur erwärmt sein, um das Band 19 durch die Luftströmung zu beheizen. Alternativ kann eine Beheizung auch durch Heizdrähte an oder in dem Band 19 erfolgen. Schließlich kann noch ein Abstreifer an dem Weg des Bandes 19 vorgesehen sein, um das Band 19 im Betrieb ständig von Nässe und Partikeln zu reinigen. Bei der in den Figuren 4 und 5 dargestellten Ausführungsform wäre ein geeigneter Ort für die Anbringung eines solchen Abstreifers das vordere Ende des Ausschubs 6, da bei einer Bewegung des Ausschubs zwischen seinen beiden Endstellungen das Band 19 diese Stelle mit seiner gesamten Länge passiert. Beispielsweise könnte ein Abstreifer mit der Umlenkrolle 21 kombiniert sein, indem er radial an der Umlenkrolle anliegt auf diese Weise die Außenseite des Bandes 19 beim Passieren der Umlenkrolle reinigt.

Als Anwendung der Erfindung wurde vorausgehend ein Kran angegeben, der seine Stromabnehmereinheit an einer Stromschienenanordnung positionieren muss. Die Erfindung kann aber ebenso bei anderen beweglichen Verbrauchern elektrischer Energie, welche mittels einer Stromabnehmereinheit eine Stromschienen- oder Schleifleitungsanordnung kontaktieren müssen, verwendet werden. Die Erfindung wurde vorausgehend anhand einer horizontalen Zustelleinheit 3 beschrieben, doch hängt ihre Funktionsfähigkeit nicht von der Lage im Raum ab. Sie könnte also bei Bedarf auch bei einer vertikalen Zustelleinheit 4 eingesetzt werden. Darüber hinaus kann die Erfindung grundsätzlich auch bei einer Zustelleinheit eingesetzt werden, bei der das zu positionierende Objekt eine andere Funktionseinheit als eine Stromabnehmereinheit 2 ist.

## Patentansprüche

1. Zustelleinheit (3) zur Positionierung einer Stromabnehmereinheit (4) eines Fahrzeugs an einer Stromschienenanordnung, mit mindestens einem in einer Zustellrichtung (H) bewegbaren Ausschub (6), welcher an dem Fahrzeug in einer Befestigungseinheit (5) linear bewegbar geführt ist, wobei der Ausschub (6) mindestens einen Hohlraum aufweist, der an einer sich in der Zustellrichtung (H) erstreckenden Längsseite offen ist, und dessen innere Oberfläche eine Kontaktfläche für an der Befestigungseinheit (5) angeordnete Führungselemente (15) bildet, **dadurch gekennzeichnet, dass** an dem Ausschub (6) ein flexibles Band (19) angeordnet ist, von dem ein Abschnitt die offene Längsseite des Hohlraumes entlang eines aus der Befestigungsvorrichtung (5) herausragenden Abschnitts des Ausschubs (6) zumindest teilweise abdeckt und ein anderer Abschnitt sich in einem Reservoir befindet, dass ein erstes Ende des Bandes (19) mit der Befestigungseinheit (5) oder mit einem Ende des Ausschubs (6) verbunden ist, und dass das zweite Ende des Bandes (19) unter einer Zugspannung in Längsrichtung an einer Zugvorrichtung gelagert ist, die bei einer Bewegung des Ausschubs (6), durch die sich der aus der Befestigungsvorrichtung (5) herausragende Abschnitt des Ausschubs (6) verkürzt oder verlängert, das Band (19) um die gleiche Länge und mit der gleichen Geschwindigkeit in das Reservoir zieht bzw. aus dem Reservoir ausgibt.

2. Zustelleinheit (3) nach Anspruch 1, **dadurch gekennzeichnet, dass** das Band (19), falls es mit einem Ende des Ausschubs (6) verbunden ist, mit dem vorderen Ende des Ausschubs (6), welches in einer aus der Befestigungseinheit (5) ausgefahrenen Endstellung des Ausschubs (6) weiter als das andere Ende von der Befestigungseinheit (5) entfernt ist, verbunden ist.

3. Zustelleinheit (3) nach 1 oder 2, **dadurch gekennzeichnet, dass** die Zugvorrichtung eine an dem vorderen Ende des Ausschubs (6) angeordnete Umlenkrolle (21), über die das Band geführt ist, und einen in dem Ausschub (6) linear beweglich geführten Schlitten (7) aufweist, der durch ein Getriebe (11, 12, 13) mit dem Ausschub (6) kinematisch so gekoppelt ist, dass er sich bei einer Bewegung des Ausschubs (6) gegenüber der Befestigungseinheit (5) in der gleichen Richtung und mit der gleichen Geschwindigkeit gegenüber dem Ausschub (6) bewegt, und dass das zweite Ende des Bandes (19) in einem hinteren Abschnitt des Schlittens (7), welcher sich in einer aus dem Ausschub (6) ausgefahrenen Endstellung des Schlittens (7) noch innerhalb des Ausschubs (6) befindet, mit dem Schlitten (7) verbunden ist.

4. Zustelleinheit (3) nach Anspruch 3, **dadurch gekennzeichnet, dass** die Umlenkrolle (21) dergestalt beweglich gelagert ist, dass die Zugspannung des Bandes (19) von der Stellung der Umlenkrolle (21) abhängt, und dass sie zwischen zwei Endstellungen in einer beliebigen Stellung fixierbar ist oder dergestalt federnd gelagert ist, dass die Zugspannung des Bandes (19) durch die Federkraft der Lagerung bestimmt wird.

5. Zustelleinheit (3) nach Anspruch 1 oder 2, **dadurch gekennzeichnet, dass** die Zugvorrichtung durch eine Federtrommel gebildet wird, welche das Band (19) abhängig von der Bewegungsrichtung des Ausschubs (6) entweder aufwickelt oder abwickelt und durch eine Feder in der Richtung des Aufwickelns so vorgespannt ist, dass sie das Band (19) in jeder Stellung des Ausschubs (6) unter einer Zugspannung hält.

6. Zustelleinheit (3) nach Anspruch 5, **dadurch gekennzeichnet, dass** die Federtrommel an einem vorderen Ende des Ausschubs (6), welches in der ausgefahrenen Endstellung des Ausschubs (6) weiter als dessen anderes Ende von der Befestigungseinheit (5) entfernt ist, angeordnet ist, wenn das erste Ende des Bandes (19) mit der Befestigungseinheit (5) verbunden ist, und dass die Federtrommel an der Befestigungseinheit (5) angeordnet ist, wenn das erste Ende des Bandes (19) mit dem vorderen Ende des Ausschubs, welches in der ausgefahrenen Endstellung des Ausschubs (6) weiter als dessen anderes Ende von der Befestigungseinheit (5) entfernt ist, verbunden ist.

7. Zustelleinheit (3) nach einem der Ansprüche 1 bis 6, **dadurch gekennzeichnet, dass** das Band (19) die offene Seite des Hohlraumes an einer von zwei in der Zustellrichtung (H) parallel zueinander verlaufenden Längskanten des Hohlraumes ganz abdeckt und an der anderen Längskante ein schmaler Spalt vorbestimmter Breite zwischen der Längskante des Hohlraumes und dem Band (19) vorgesehen ist.

8. Zustelleinheit (3) nach einem der Ansprüche 1 bis 7, **dadurch gekennzeichnet, dass** der Ausschub (6) an mindestens einer sich in der Zustellrichtung (H) erstreckenden Außenseite, an welcher sich kein Hohlraum mit Kontaktflächen für Führungselemente (15) befindet, eine geschlossene Abdeckung aufweist.

9. Zustelleinheit (3) nach einem der Ansprüche 1 bis 8, **dadurch gekennzeichnet, dass** das flexible Band (19) aus einem kälteflexiblen und feuchtigkeitsabweisenden Kunststoffmaterial, vorzugsweise aus Polyurethan, besteht.

10. Zustelleinheit (3) nach einem der Ansprüche 1 bis 9, **dadurch gekennzeichnet, dass** das flexible Band (19) mit einer elektrischen Heizvorrichtung in Form entlang des Bandes (19) verlaufender oder in das Band (19) integrierter flexibler leitender Drähte ausgestattet ist.

11. Zustelleinheit (3) nach einem der Ansprüche 1 bis 10, **dadurch gekennzeichnet, dass** eine Druckluftversorgung vorgesehen ist, durch welche der durch das Band (19) abgedeckte Hohlraum von der Befestigungseinheit (5) aus mit einem Überdruck gegenüber der Umgebung beaufschlagt wird, wobei die zugeführte Druckluft vorzugsweise temperiert ist.

12. Zustelleinheit (3) nach einem der Ansprüche 1 bis 11, **dadurch gekennzeichnet, dass** an einer Stelle, die bei einer Bewegung des Ausschubs (6) aus der in die Befestigungseinheit (5) eingefahrenen Endstellung in die aus der Befestigungseinheit (5) ausgefahrene Endstellung von dem dadurch bewegten Abschnitt des Bandes (19) passiert wird, ein Abstreifer angeordnet ist, über dessen Oberfläche die Oberfläche des Bandes (19) gleitet.

13. Zustelleinheit (3) nach einem der Ansprüche 1 bis 12, **dadurch gekennzeichnet, dass** ein zweites flexibles Band gleicher Art vorgesehen ist, das einen von dem ersten Band (19) nicht abgedeckten Abschnitt der offenen Längsseite des Hohlraumes entlang eines aus der Befestigungsvorrichtung (5) in der entgegengesetzten Richtung herausragenden Abschnitts des Ausschubs (6) abdeckt, und dass die Enden des zweiten Bandes in gleicher Weise mit der Befestigungseinheit (5) auf deren entgegengesetzter Seite oder mit dem entgegengesetzten Ende des Ausschubs (6) verbunden bzw. an einer Zugvorrichtung gleicher Art gelagert sind wie diejenigen des ersten Bandes (19).

## Claims

1. Feed unit (3) for positioning a current collector unit (4) of a vehicle on a conductor rail arrangement, with at least one extension unit (6) which is movable in a feed direction (H) and is guided so as to be movable linearly on the vehicle in a fastening unit (5), wherein the extension unit (6) exhibits at least one cavity which is open on a longitudinal side extending in the feed direction (H), and the inner surface of which forms a contact surface for guide elements (15) arranged on the fastening unit (5), **characterised in that** arranged on the extension unit (6) there is a flexible band (19), one section of which at least partially covers the open longitudinal side of the cavity along a section of the extension unit (6) projecting out of the fastening device (5) and another section of which is located in a reservoir, **in that** a first end of the band (19) is connected with the fastening unit (5) or with one end of the extension unit (6), and **in that** the second end of the band (19) is mounted under a tensile loading in the longitudinal direction on a traction device which when there is a movement of the extension unit (6) causing a shortening or a lengthening of the section of the extension unit (6) projecting out of the fastening device (5), draws the same length of band (19) into the reservoir or pays it out of the reservoir at the same speed.

2. Feed unit (3) according to claim 1, **characterised in that** if the band (19) is connected with one end of the extension unit (6), it is connected with the front end of the extension unit (6) which in an end position of the extension unit (6) extending out of the fastening unit (5) is further away from the fastening unit (5) than the other end.

3. Feed unit (3) according to claim 1 or 2, **characterised in that** the traction device exhibits an end roller (21) which is arranged at the front end of the extension unit (6) and around which the band is guided, and a slide (7) which is guided so as to be movable linearly in the extension unit (6) and is coupled by a gear unit (11, 12, 13) with the extension unit (6) kinematically so that when there is a movement of the extension unit (6) in relation to the fastening unit (5) it moves in the same direction and at the same speed in relation to the extension unit (6), and **in that** the second end of the band (19) is connected with the slide (7) in a rear section of the slide (7) which is still inside the extension unit (6) in an end position of the slide (7) extending out of the extension unit (6).

4. Feed unit (3) according to claim 3, **characterised in that** the end roller (21) is mounted so that it can be moved in such a way that the tensile loading of the band (19) depends on the position of the end roller (21), and **in that** it can be fixed in any optional position between the two end positions or is spring mounted in such a way that the tensile loading of the band (19) is determined by the spring force of the mounting.

5. Feed unit (3) according to claim 1 or 2, **characterised in that** the traction device is formed by a spring-loaded drum which either rolls up or rolls out the band (19) depending on the direction of movement of the extension unit (6) and is preloaded by a spring in the rolling up direction so that it holds the band (19) under a tensile loading in every position of the extension unit (6).

6. Feed unit (3) according to claim 5, **characterised in that** the spring-loaded drum is arranged at a front end of the extension unit (6) which in the extended end position of the extension unit (6) is further away from the fastening unit (5) than its other end when the first end of the band (19) is connected with the fastening unit (5), and **in that** the spring-loaded drum is arranged on the fastening unit (5) when the first end of the band (19) is connected with the front end of the extension unit which in the extended end position of the extension unit (6) is further away from the fastening unit (5) than its other end.

7. Feed unit (3) according to one of claims 1 to 6, **characterised in that** the band (19) fully covers the open side of the cavity at one of the two longitudinal edges of the cavity running parallel to one another in the feed direction (H) while at the other longitudinal edge there is provided a narrow gap of predetermined width between the longitudinal edge of the cavity and the band (19).

8. Feed unit (3) according to one of claims 1 to 7, **characterised in that** the extension unit (6) exhibits a closed cover on at least one outer side which extends in the feed direction (H) on which there is no cavity with contact surfaces for guide elements (15).

9. Feed unit (3) according to one of claims 1 to 8, **characterised in that** the flexible band (19) is made of a cold-flexible and moisture-repellent plastics material, preferably polyurethane.

10. Feed unit (3) according to one of claims 1 to 9, **characterised in that** the flexible band (19) is equipped with an electrical heating device in the form of flexible conducting wires running along the band (19) or integrated into the band (19).

11. Feed unit (3) according to one of claims 1 to 10, **characterised in that** a compressed air supply is provided through which the cavity covered by the band (19) is subjected to a positive pressure in excess of the ambient pressure from the fastening unit (5), wherein the supplied compressed air is preferably conditioned.

12. Feed unit (3) according to one of claims 1 to 11, **characterised in that** a wiper, over the surface of which the surface of the band (19) slides, is arranged in a position which is passed by the section of the band (19) caused to move by a movement of the extension unit (6) out of the end position retracted into the fastening unit (5) into the end position extended out of the fastening unit (5).

13. Feed unit (3) according to one of claims 1 to 12, **characterised in that** a second flexible band of the same kind is provided which covers a section of the open longitudinal side of the cavity not covered by the first band (19) along a section of the extension unit (6) projecting out of the fastening device (5) in the opposite direction, and **in that** the ends of the second band are connected in the same way with the fastening unit (5) on the opposite side thereof or with the opposite end of the extension unit (6) or secured to a traction device of the same kind like those of the first band (19).

## Revendications

1. Unité d'avance (3) servant à positionner une unité balai conducteur (4) d'un véhicule au niveau d'un ensemble de barres conductrices, comprenant au moins une glissière (6) pouvant être déplacée dans un sens d'avance (H), laquelle est guidée de manière à pouvoir être déplacée de manière linéaire au niveau du véhicule, dans une unité de fixation (5), sachant que la glissière (6) présente au moins une cavité, qui est ouverte au niveau d'un côté longitudinal s'étendant dans le sens d'avance (H) et dont la surface intérieure forme une face de contact pour des éléments de guidage (15) disposés au niveau de l'unité de fixation (5), **caractérisée en ce qu'**une bande (19) flexible est disposée au niveau de la glissière (6), dont une section recouvre au moins en partie le côté longitudinal ouvert de la cavité le long d'une section de la glissière (6) dépassant du dispositif de fixation (5), et dont l'autre section se trouve dans un réservoir, **en ce qu'**une première extrémité de la bande (19) est reliée à l'unité de fixation (5) ou à une extrémité de la glissière (6), et **en ce que** la deuxième extrémité de la bande (19) est logée sous l'action d'une tension de traction dans le sens longitudinal au niveau d'un dispositif de traction, lequel, lors d'un déplacement de la glissière (6), par lequel la section de la glissière (6) dépassant du dispositif de fixation (5) se raccourcit ou s'allonge, fait rentrer ou sortir la bande (19), de la même longueur et avec la même vitesse, dans le réservoir ou hors de ce dernier.

2. Unité d'avance (3) selon la revendication 1, **caractérisée en ce que** si la bande (19) est reliée à une extrémité de la glissière (6), ladite bande est reliée à l'extrémité avant de la glissière (6), laquelle extrémité est plus éloignée de l'unité de fixation (5), dans une position finale de la glissière (6) sortie de l'unité de fixation (5), que l'autre extrémité.

3. Unité d'avance (3) selon la revendication 1 ou 2, **caractérisée en ce que** le dispositif de traction présente un galet de renvoi (21) disposé au niveau de l'extrémité avant de la glissière (6), lequel permet de guider la bande, et un chariot (7) guidé de manière mobile linéairement dans la glissière (6), lequel chariot est couplé de manière cinématique à la glissière (6) par un engrenage (11, 12, 13) de sorte qu'il se déplace, lors d'un déplacement de la glissière (6), par rapport à l'unité de fixation (5) dans la même direction et à la même vitesse par rapport à la glissière (6), et **en ce que** la deuxième extrémité de la bande (19) est reliée au chariot (7) dans une section arrière du chariot (7), laquelle se trouve, dans une position finale du chariot (7) sortie de la glissière (6), encore à l'intérieur de la glissière (6).

4. Unité d'avance (3) selon la revendication 3, **caractérisée en ce que** le galet de renvoi (21) est logé de manière mobile de telle manière que la tension de traction de la bande (19) dépend de la position du galet de renvoi (21), et **en ce que** ledit galet de renvoi peut être fixé dans une position quelconque entre deux positions finales ou est logé sur ressort de telle manière que la tension de traction de la bande (19) est déterminée par l'effet de ressort du support.

5. Unité d'avance (3) selon la revendication 1 ou 2, **caractérisée en ce que** le dispositif de traction est formé par un tambour à ressort qui, soit enroule, soit déroule la bande (19) en fonction du sens de déplacement de la glissière (6) et qui est précontraint par un ressort dans le sens de l'enroulement, de telle manière qu'il maintient la bande (19), dans chaque position de la glissière (6), sous l'action d'une tension de traction.

6. Unité d'avance (3) selon la revendication 5, **caractérisée en ce que** le tambour à ressort est disposé au niveau d'une extrémité avant de la glissière (6), laquelle est davantage éloignée de l'unité de fixation (5), dans la position finale sortie de la glissière (6), que l'autre extrémité de celle-ci, lorsque la première extrémité de la bande (19) est reliée à l'unité de fixation (5), et **en ce que** le tambour à ressort est disposé au niveau de l'unité de fixation (5), lorsque la première extrémité de la bande (19) est reliée à l'extrémité avant de la glissière, laquelle extrémité est davantage éloignée de l'unité de fixation (5), dans la position finale sortie de la glissière (6), que l'autre extrémité de celle-ci.

7. Unité d'avance (3) selon l'une quelconque des revendications 1 à 6, **caractérisée en ce que** la bande (19) recouvre en totalité le côté ouvert de la cavité au niveau d'une de deux arêtes longitudinales de la cavité, s'étendant de manière parallèle l'une par rapport à l'autre dans le sens d'avance (H), et **en ce qu'**une fente étroite d'une largeur prédéfinie entre l'arête longitudinale de la cavité et la bande (19) est prévue au niveau de l'autre arête longitudinale.

8. Unité d'avance (3) selon l'une quelconque des revendications 1 à 7, **caractérisée en ce que** la glissière (6) présente un recouvrement fermé, au niveau au moins d'un côté extérieur s'étendant dans le sens d'avance (H), au niveau duquel aucune cavité comprenant des faces de contact pour des éléments de guidage (15) ne se trouve.

9. Unité d'avance (3) selon l'une quelconque des revendications 1 à 8, **caractérisée en ce que** la bande flexible (19) est constituée d'un matériau en matière plastique flexible au froid et hydrofuge, de préférence en polyuréthane.

10. Unité d'avance (3) selon l'une quelconque des revendications 1 à 9, **caractérisée en ce que** la bande (19) flexible est équipée d'un dispositif de chauffage électrique se présentant sous forme de fils métalliques flexibles conducteurs s'étendant le long de la bande (19) ou intégrés dans la bande (19).

11. Unité d'avance (3) selon l'une quelconque des revendications 1 à 10, **caractérisée en ce qu'**est prévue une alimentation en air comprimé, par laquelle la cavité recouverte par la bande (19) est soumise à l'action d'une surpression par rapport à l'environnement par l'unité de fixation (5), sachant que l'air comprimé amené est de préférence thermorégulé.

12. Unité d'avance (3) selon l'une quelconque des revendications 1 à 11, **caractérisée en ce qu'**est disposé au niveau d'un emplacement, qui est traversé par la section de bande (19) déplacée de ce fait lors d'un déplacement de la glissière (6) depuis la position finale rentrée dans l'unité de fixation (5) dans la position finale sortie de l'unité de fixation (5), un racloir, au-dessus de la surface duquel la surface de la bande (19) glisse.

13. Unité d'avance (3) selon l'une quelconque des revendications 1 à 12, **caractérisée en ce qu'**une deuxième bande flexible du même type est prévue, laquelle recouvre une section, non recouverte par la première bande (19), du côté longitudinal ouvert de la cavité le long d'une section de la glissière (6) dépassant du dispositif de fixation (5) dans le sens opposé, et **en ce que** les extrémités de la deuxième bande sont reliées à l'unité de fixation (5) sur le côté opposé de celle-ci ou à l'extrémité opposée de la glissière (6) ou sont logées au niveau d'un dispositif de traction du même type de la même manière que celles de la première bande (19).
